# EUROPEAN PATENT APPLICATION

(11) **EP 4 650 962 A1**
(43) Date of publication of application: **19.11.2025**
(21) Application number: 24909212.3
(22) Date of filing: 04.06.2024
(51) Int. Cl.: G06F 9/50

(54) **INSTRUCTION PROCESSING METHOD AND APPARATUS, PROCESSOR, AND COMPUTER-READABLE STORAGE MEDIUM**

(30) Priority: 26.03.2024 CN 202410350133
(71) Applicant: Hygon Information Technology Co., Ltd., Tianjin 300392 (CN)
(72) Inventor: JIN, Weisong, Tianjin 300392 (CN)
(74) Representative: Regimbeau
(86) International application number: PCT/CN2024/097268
(87) International publication number: WO 2025/200126

(57) **Abstract**

The embodiments of the present disclosure provide an instruction processing method and device, a processor and a computer-readable storage medium. The instruction processing method includes: acquiring inter-thread resource conflict information of a plurality of threads which are processed in a processor, to determine at least two threads having a resource conflict in the plurality of threads; determining alternative threads which are arbitrated for being scheduled in a current operation cycle from the plurality of the threads, wherein the alternative threads do not simultaneously include the at least two threads having the resource conflict; and determining a target thread to be scheduled in the current operation cycle from the alternative threads. By avoiding simultaneously scheduling threads with a resource conflict, the instruction processing method improves the parallelism and resource utilization efficiency of instruction execution of a processor based on the simultaneous multithreading technology.

## Description

The present application claims priority of the Chinese Patent Application No. 202410350133.5, filed on March 26, 2024, the disclosure of which is incorporated herein by reference in its entirety as part of the present application.

### TECHNICAL FIELD

Embodiments of the present disclosure relates to an instruction processing method and device, a processor and a computer-readable storage medium.

### BACKGROUND

Modern multiple issue CPUs (Central Processing Units) that have high performance include at least one processor core, and each processor core includes a plurality of execution units to execute instructions. For example, the pipeline process of instruction execution includes five stages: Instruction Fetch (IF), Instruction Dispatch/Decode (ID), Execution (EX), Memory (MEM), and Write Back (WB, updating the result obtained after executing an instruction to a register).

In order to increase the parallelism of instruction execution in the processor, the processor may use simultaneous multithreading (SMT) technology, so that the pipeline structure (also referred to as "pipeline") used for instruction execution in the processor can support two or a plurality of (hardware) threads to be executed simultaneously. For example, an SMT processor may be an SMT2 processor (supporting a maximum of two concurrent threads), an SMT4 processor (supporting a maximum of four concurrent threads), or an SMT8 processor (supporting a maximum of eight concurrent threads). When a single-thread processor is running, due to pausing reason such as cache miss, the plurality of execution units in the processor may be idle. But for processors using SMT technology, although a certain thread is paused, other threads can also continue to use these hardware resources, which improves the utilization rate of the hardware resources, avoids idling, and improves the throughput and performance-per-watt of the processor.

However, with the number of threads in the SMT processor increasing, the competition for shared resources between threads becomes more intense, and the resource competition will cause the parallelism of the plurality of threads weakening, which reduces the performance of the processor and the utilization rate of resources. Therefore, how to alleviate the resource competition between threads and improve the parallelism has become an important research direction of simultaneous multithreading processors.

### SUMMARY

At least one embodiment of the present disclosure provides an instruction processing method, which includes: acquiring inter-thread resource conflict information of a plurality of threads which are processed in a processor, to determine at least two threads having a resource conflict in the plurality of threads; determining alternative threads which are arbitrated for being scheduled in a current operation cycle from the plurality of the threads, wherein the alternative threads do not simultaneously comprise the at least two threads having the resource conflict; and determining a target thread to be scheduled in the current operation cycle from the alternative threads.

For example, in the instruction processing method provided in at least one embodiment of the present disclosure, the alternative threads are selected from the plurality of the threads and are threads which are at a schedulable state in the current operation cycle.

For example, in the instruction processing method provided in at least one embodiment of the present disclosure, the alternative threads are further selected from threads of which a thread priority is higher than a preset priority in the plurality of the threads.

For example, the instruction processing method provided in at least one embodiment of the present disclosure, further includes selecting, from the at least two threads having the resource conflict, a thread which has a higher thread priority to be used for the alternative threads.

For example, in the instruction processing method provided in at least one embodiment of the present disclosure, the at least two threads having the resource conflict have the resource conflict for a first-class resource in the processor, and the alternative threads are arbitrated for being scheduled in the current operation cycle based on allocation for the first-class resource.

For example, in the instruction processing method provided in at least one embodiment of the present disclosure, the acquiring inter-thread resource conflict information of a plurality of threads which are processed in a processor, includes: acquiring the inter-thread resource conflict information based on competitive information between the plurality of the threads with each other according to a resource which is recorded by a plurality of counters in a first time.

For example, the instruction processing method provided in at least one embodiment of the present disclosure further includes: marking flag bits of the at least two threads having the resource conflict after the acquiring inter-thread resource conflict information of a plurality of threads which are processed in a processor.

For example, in the instruction processing method provided in at least one embodiment of the present disclosure, the alternative threads are determined based on the flag bits corresponding to the plurality of the threads, so that the alternative threads do not simultaneously comprise the at least two threads having the resource conflict.

For example, the instruction processing method provided in at least one embodiment of the present disclosure further includes: resetting the flag bits of the plurality of the threads to zero before marking the flag bits of the at least two threads having the resource conflict.

For example, the instruction processing method provided in at least one embodiment of the present disclosure further includes: resetting the plurality of the plurality of counters to zero after the marking the flag bits of the at least two threads having the resource conflict.

At least one embodiment of the present disclosure further provides an instruction processing device, which includes: an acquiring module, configured to acquire inter-thread resource conflict information of a plurality of threads which are processed in a processor, to determine at least two threads which have a resource conflict in the plurality of threads; and a scheduling module, configured to determine alternative threads which are arbitrated for being scheduled in a current operation cycle from the plurality of the threads, and determine a target thread to be scheduled in the current operation cycle from the alternative threads, wherein the alternative threads do not simultaneously comprise the at least two threads which have the resource conflict.

For example, in the instruction processing device provided in at least one embodiment of the present disclosure, the alternative threads are selected from the plurality of the threads and are threads which are at a schedulable state in the current operation cycle.

For example, in the instruction processing device provided in at least one embodiment of the present disclosure, the alternative threads are further selected from threads of which a thread priority is higher than a preset priority in the plurality of the threads.

For example, in the instruction processing device provided in at least one embodiment of the present disclosure, the scheduling module is further configured to select a thread which has a higher priority to be used for the alternative threads from the at least two threads which have the resource conflict.

For example, in the instruction processing device provided in at least one embodiment of the present disclosure, the at least two threads which have the resource conflict have the resource conflict for a first-class resource in the processor; and the scheduling module causes the alternative thread to be arbitrated for being scheduled in the current operation cycle based on allocation for the first-class resource.

For example, the instruction processing device provided in at least one embodiment of the present disclosure further includes a conflict detecting module, the conflict detecting module includes a plurality of counters, and the conflict detecting module is configured to acquire the inter-thread resource conflict information based on competitive information between the plurality of the threads with each other according to a resource which is recorded by a plurality of counters in a first time.

For example, the instruction processing device provided in at least one embodiment of the present disclosure further includes a marking module, which is configured to mark flag bits of the at least two threads which have the resource conflict after the acquiring inter-thread resource conflict information of a plurality of threads which are processed in a processor.

For example, in the instruction processing device provided in at least one embodiment of the present disclosure, the marking module is further configured to reset the flag bits of the plurality of the threads to zero before marking the flag bits of the at least two threads which have the resource conflict.

For example, in the instruction processing device provided in at least one embodiment of the present disclosure, the conflict detecting module is further configured to reset the plurality of the counters to zero after the marking the flag bits of the at least two threads which have the resource conflict.

At least one embodiment of the present disclosure further provides an instruction processing device, which includes a processor and a memory. The memory stores computer-readable instructions and is communicatively connected with the processor; and the processor executes the computer-readable instructions stored in the memory to implement the instruction processing method provided in any embodiment mentioned above.

At least one embodiment of the present disclosure further provides a processor, which includes the instruction processing device provided in at least one embodiment of the present disclosure.

At least one embodiment of the present disclosure further provides a computer-readable storage medium. Computer-readable instructions are stored in the computer-readable storage medium, and when a processor executes the computer-readable instructions, the instruction processing method provided in any embodiment mentioned above is implemented.

### BRIEF DESCRIPTION OF DRAWINGS

In order to illustrate the technical solutions of the embodiments of the present disclosure more clearly, the drawings of the embodiments are briefly described below. It is obvious that the drawings described below refer only to some embodiments of the present disclosure and are not limited to the present disclosure.
Fig. 1 illustrates a schematic diagram of a pipeline of a processor core;
Fig. 2 illustrates a schematic diagram of a thread scheduling process of an SMT4 processor;
Fig. 3A illustrates an example of performing shared resource arbitration in the renaming stage;
Fig. 3B illustrates another example of performing shared resource arbitration in the renaming stage;
Fig. 4 illustrates a schematic flowchart of an instruction processing method provided in at least one embodiment of the present disclosure;
Fig. 5 illustrates a schematic diagram of acquiring inter-thread resource-conflict information provided in at least one embodiment of the present disclosure;
Fig. 6 illustrates a structural schematic diagram of an instruction processing device provided in at least one embodiment of the present disclosure;
Fig. 7 illustrates a structural schematic diagram of another instruction processing device provided in at least one embodiment of the present disclosure;
Fig. 8 is a schematic diagram of a computer-readable storage medium provided in at least one embodiment of the present disclosure; and
Fig. 9 is a schematic block diagram of an electronic device provided in at least one embodiment of the present disclosure.

### DETAILED DESCRIPTION

In order to make the purpose, technical solutions and advantages of the embodiments of the present disclosure clearer, the technical solutions of the embodiments of the present disclosure will be clearly and completely described below in conjunction with the drawings of the embodiments of the present disclosure. Obviously, the embodiments described are some embodiments of the present disclosure, not all embodiments. Based on the embodiments of the present disclosure described, all other embodiments obtained by a person skilled in the art without creative labor are within the protection scope of the present disclosure.

Unless otherwise defined, the technical or scientific terms used in the present disclosure shall have the ordinary meaning understood by persons with general skills in the field to which the present disclosure belongs. The terms "first", "second" and similar expressions used in the present disclosure do not indicate any order, quantity or importance, but only to distinguish the different components. Similarly, the similar words such as "one", "a" or "the" do not indicate a quantitative limit, but rather the existence of at least one. Words such as "include" or "contain" mean that the element or object that precedes the word includes the element or object listed after the word and its equivalents, and does not exclude other elements or objects. Similar terms such as "connect" or "connected" are not limited to physical or mechanical connections, but may include electrical connections, whether direct or indirect. "Up", "Down", "Left", "Right", etc., are only used to indicate the relative positional relationship, and when the absolute position of the object being described changes, the relative positional relationship may also change accordingly.

In the present disclosure, an operating cycle may be, for example, a clock cycle or a machine cycle, or other time period for completing one cycle operation in instruction pipeline of the processor. An execution process of one instruction includes several stages, one basic operation (e.g., fetching an instruction, reading from a memory, writing to a memory, etc.) is completed in each stage, and the time required to complete one basic operation is called a machine cycle, also known as a CPU cycle.

In order to improve the performance of a processor core, the processor core may use a pipeline mode, i.e., the entire process of fetching, decoding, executing and writing a result of an instruction is divided into a plurality of pipeline stages, and one instruction in one operation cycle can only be in one of the pipeline stages, but the processor core allows a plurality of instructions to run in different pipeline stages.

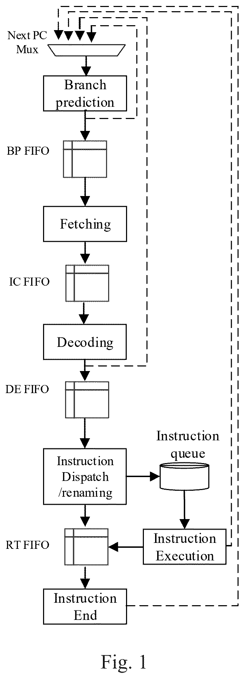

Fig. 1 illustrates a schematic diagram of a pipeline of a processor core, and the dotted lines with arrows in Fig.1 represent the redirected instruction flow.

As shown in Fig. 1, a processor core (e.g., a CPU core) of a single-core processor or a multi-core processor uses the pipeline technique to increase instruction level parallelism. The internal pipeline of the processor core includes a plurality of pipeline stages, such as predicting the program counter (PC) through branch prediction, and performing instruction fetching, instruction decoding, instruction dispatching and renaming, instruction execution and instruction retirement according to the PC. Waiting queues between the various pipeline-levels are disposed as needed, and such waiting queues are typically first-in and first-out (FIFO) queues. For example, after a branch prediction unit, a branch prediction (BP) FIFO queue is disposed to store branch prediction results. After an instruction fetching unit, an instruction cache (IC) FIFO is disposed to cache the instructions fetched. After an instruction decoding unit, a decoding (DE) FIFO is disposed to cache the instructions after decoding. After an instruction dispatching and renaming unit, an end (RT) FIFO is disposed to cache, after execution, instructions waiting for confirmation to end. The pipeline of the processor core also includes an instruction queue, to cache instructions to be executed by the instruction execution unit after instruction dispatching and renaming.

As mentioned above, in order to improve the parallelism of instruction execution in the processor, the processor may further use simultaneous multithreading (SMT) technology, so that the pipeline structure (also referred to as "pipeline" for short) used for instruction execution in the processor may support two or more (hardware) threads to be executed simultaneously. For example, the simultaneous multithreading technology may be SMT2 (supporting a maximum of two concurrent threads), SMT4 (supporting a maximum of four concurrent threads), or SMT8 (supporting a maximum of eight concurrent threads), etc. In the pipeline of the processors that supports simultaneous multithreading technology, the computing resource in the processor is shared by a plurality of threads. For example, each thread may have its own independent logical register, but a plurality of physical registers in the processor are shared by the plurality of threads. In various queues for control functions of the pipeline, some queues may be shared by the plurality of threads, such as an instruction scheduling queue, and some queues may be statically divided among the plurality of threads, such as an instruction reordering queue. The simultaneous multithreading technology may use the parallelism between threads to improve the resource utilization rate of the pipeline.

In addition, processors using the simultaneous multithreading (SMT) technology may operate in either an SMT mode or a single-threading mode. For example, in the SMT mode, when one thread encounters a waiting state, other threads may continue to be executed, which can effectively improve the utilization rate of hardware resources, thereby enhancing the multi-threading processing ability, overall performance and performance-per-watt of the CPU core.

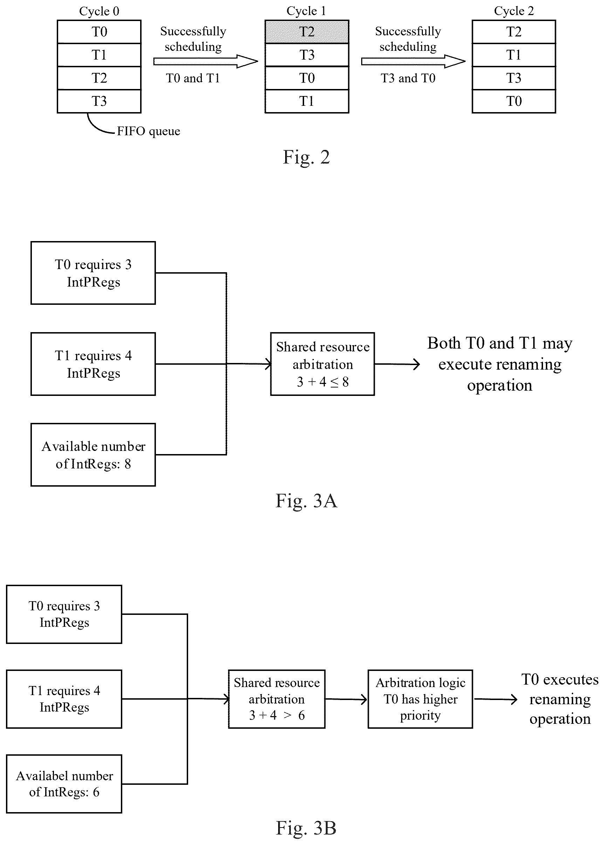

For example, Fig. 2 illustrates a schematic diagram of a thread scheduling process of an SMT4 processor.

For example, an SMT4 processor may schedule two threads per operation cycle. As shown in Fig. 2, for the scheduling of a queue shared by a plurality of threads in a certain pipeline-level, the thread numbers T0-T3 of four threads are stored in a first-in and first-out (FIFO) queue. From the head to the tail of the FIFO queue, the priorities of the four threads are ranked from the high to the low. In the operation cycle 0, the priority order of threads stored in the FIFO queue at the initial state is T0, T1, T2 and T3, and the four threads are all at the schedulable state. After the threads T0 and T1 are successfully scheduled, the status of the FIFO queue is updated to T2, T3, T0 and T1. In the operation cycle 1, the priority order of threads is T2, T3, T0, and T1, and because the thread T2 is at the unschedulable state (a gray box in Fig. 2 indicates that the thread is in the unschedulable state), the schedulable threads are the threads T3, T0 and T1. After the threads T3 and T0 are successfully scheduled, the status of the FIFO queue is updated to T2, T1, T3 and T0. The subsequent thread scheduling process continues the same way and will not be repeated here.

For simultaneous multithreading processors (also referred to as SMT processors), when the shared resources that are schedulable meet the requirements of all threads to be scheduled (e.g., thread T0 and thread T1), the threads to be scheduled may be performed scheduling simultaneously. Otherwise, there is a resource conflict between the threads to be scheduled, and shared resource arbitration requires to be performed to determine a target thread for scheduling. For example, the solution of shared resource arbitration is to select a thread that has the highest priority from the threads to be scheduled, and the remaining threads that have a lower priority suspended for execution.

For example, the resources shared by a plurality of threads in an SMT processor include, but are not limited to: an execution unit (e.g., an arithmetic logic unit, a floating-point arithmetic unit, etc.), a cache (e.g., level-1 data cache, level-1 instruction cache, level-2 data cache, etc.), a prediction execution path cache in a branch prediction period, a physical register, etc.

For example, in the renaming stage, the SMT processor dynamically allocates the physical register resource inside the SMT processor to the architecture register in the threads to be scheduled. In the processor, the number of physical registers used for the renaming operation is typically greater than the number of architecture registers. The architecture registers include, but are not limited to, fixed-point architecture registers, floating-point architecture registers, etc. The fixed-point architecture registers are used for operating the operands of fixed-point instructions, and floating-point architecture registers are used for operating the operands of floating-point instructions. When allocating physical register resources, the type of architecture registers and the type of physical registers corresponds to each other in a one-to-one corresponding relationship. For example, a fixed-point architecture register requires a corresponding fixed-point physical register resource (IntPReg), and a floating-point architecture register requires a corresponding floating-point physical register resource. In the renaming stage, the shared resources allocated to the thread to be scheduled also include other resources other than the physical register resources, and the following Fig. 3A and Fig. 3B illustrate the process of arbitrating threads by using the fixed-point physical register resource as an example.

Fig. 3A illustrates an example of performing shared resource arbitration in the renaming stage.

As shown in Fig. 3A, in a current operation cycle of the renaming stage, the threads to be scheduled include the thread T0 and the thread T1. Before a thread is scheduled to perform the renaming operation, a shared resource arbitration needs to be performed on the thread T0 and the thread T1. The thread T0 requires 3 fixed-point physical registers (IntPReg), and the thread T1 requires 4 fixed-point physical registers. Currently, the available number of fixed-point physical register resources is 8, which is greater than the number of the fixed-point physical registers required to simultaneously schedule the thread T0 and the thread T1, i.e., 3+4 ≤ 8, then there is no resource conflict between the thread T0 and the thread T1, and the thread T0 and the thread T1 may be scheduled simultaneously to perform renaming operation.

For example, Fig. 3B illustrates another example of performing shared resource arbitration in the renaming stage.

As shown in Fig. 3B, in the current operation cycle of the renaming stage, the threads to be scheduled include the thread T0 and the thread T1. The thread T0 requires three fixed-point physical registers, and the thread T1 requires four fixed-point physical registers. Currently, the available number of fixed-point physical registers is 6, which is less than the number of fixed-point physical registers required to simultaneously schedule the thread T0 and the thread T1, i.e., 3+4 > 6, then there is a resource conflict between the thread T0 and the thread T1, and the thread T0 and the thread T1 cannot be scheduled simultaneously to perform renaming operation. In the case where the arbitration logic is to select a thread to be scheduled that has a higher priority to perform scheduling, because the priority of the thread T0 is higher than the priority of the thread T1, the thread T0 is selected to perform renaming operation and the thread T1 is suspended for being scheduled. On the other hand, three physical registers are remained and are not used, which causes the decrease of the parallelism of the threads in the operation cycle and the decrease of the utilization rate of the fixed-point physical registers.

The inventor of the present disclosure notes that in a simultaneous multithreading processor with dynamic resource sharing, a plurality of threads compete for the hardware resources in the SMT processor in their respective pipeline stages, and with the increase of the number of threads, the resource competition between the threads is also more intense, which causes the parallelism of the plurality of threads weakening, and reduces the performance of the processor and the utilization rate of resources.

With respect to at least one or more of the above shortcomings, one or more embodiments of the present disclosure provide an instruction processing method and device, a processor and a computer-readable storage medium.

The instruction processing method includes: acquiring inter-thread resource conflict information of a plurality of threads which are processed in a processor, to determine at least two threads which have a resource conflict among the plurality of threads; determining alternative threads that are arbitrated for scheduling in a current operation cycle among the plurality of the threads, wherein the alternative thread does not simultaneously include the at least two threads that have the resource conflict; and determining a target thread to be scheduled in the current operation cycle from the alternative threads. By recognizing inter-thread resource conflict information of the plurality of threads, the method avoids that at least two threads which competes for resources intensely or have resource conflict are arbitrated in the same operation cycle, thereby reducing the problem of threads being suspended due to the resource conflict, and thus improving the parallelism of the plurality of threads and the utilization rate of shared resources.

The present disclosure is illustrated below by some specific embodiments. In order to keep the following descriptions of the embodiments of the present disclosure clear and concise, detailed descriptions of known functions and known components may be omitted. When any component of the embodiments of the present disclosure appears in more than one drawing, the component is represented in each drawing by the same or similar reference number.

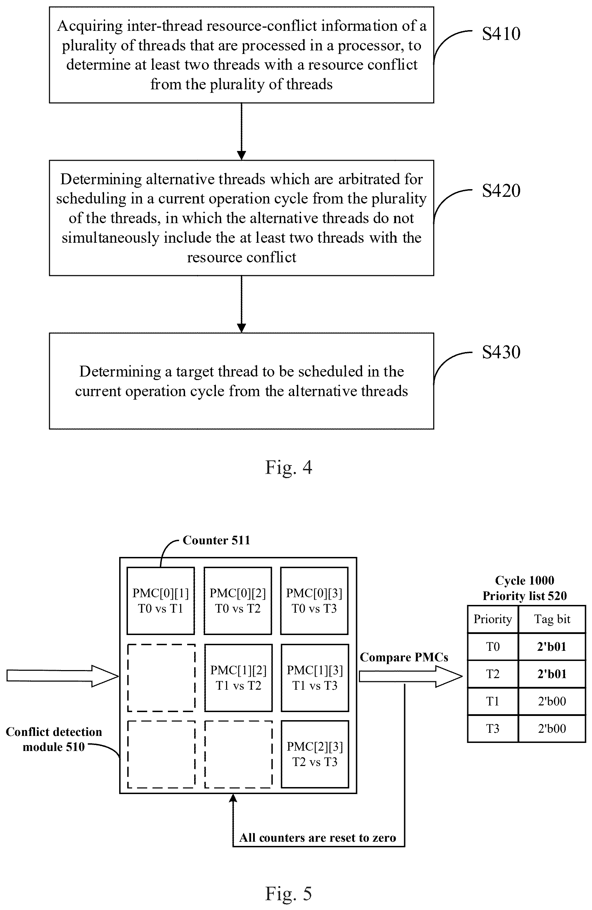

Fig. 4 illustrates a schematic flowchart of an instruction processing method provided in at least one embodiment of the present disclosure. The instruction processing method includes steps S410-S430.

Step S410: acquiring inter-thread resource conflict information of a plurality of threads which are processed in a processor, to determine at least two threads which have a resource conflict among the plurality of threads.

Step S420: determining alternative threads that are arbitrated for scheduling in a current operation cycle from the plurality of the threads, in which the alternative threads do not simultaneously include the at least two threads that have the resource conflict.

Step S430: determining a target thread to be scheduled in the current operation cycle from the alternative threads.

For example, the inter-thread resource conflict information records information about the resource conflict extent between the plurality of threads that are processed in the processor. For example, the inter-thread resource conflict information records information about which threads have a resource conflict causing one or more threads among the threads to be suspended over a period of time (e.g., 1000 operation cycles). For example, the at least two threads which are determined to have the resource conflict based on the inter-thread resource conflict information, may be the threads that have the highest probability of the resource conflict or the highest number of conflicts in the previous period.

For example, the alternative threads are threads that are selected from the plurality of threads and are at a schedulable state in the current operation cycle. In the process of a processor scheduling instructions, not all the threads in each operation cycle are at the schedulable state. For example, when at least two threads that have the resource conflict include the first thread, the first thread may have an error due to speculative execution of a jump instruction, and perform re-fetching operation in the current operation cycle, and at the time the first thread is at the unschedulable state, so that the alternative threads in the current operation cycle do not include the first thread.

For example, alternative threads may be further selected from threads each of which has the thread priority higher than a preset priority among the plurality of the threads. For example, in the digital integrated circuit design, the Register-Transfer Level (RTL) design timing constraint is a hard requirement for circuit design in terms of timing, and mainly defines the time limit required for transferring data from one register to another register in a circuit, so as to ensure the correctness and timeliness of data transmission throughout the design. Due to the RTL design timing constraint, not all threads at the schedulable state in the current operation cycle will be arbitrated, and the threads whose priority are higher than the preset priority in the schedulable threads are usually selected for arbitration. For example, assuming that the priority is from 1 to 5, and 5 represents the highest priority, then the preset priority may be determined to 3, and the thread whose priority is higher than 3 in the schedulable threads is selected as the alternative thread for arbitration.

It should be noted that the arbitration in the embodiments of the present disclosure may be for a single resource required by threads in the same stage, or for a plurality of resources (e.g., two or more types of resources are considered in a comprehensive manner) required by threads in the same stage, which is not limited by the present disclosure.

The instruction processing method provided in at least one embodiment of the present disclosure may further include selecting, from the at least two threads that have the resource conflict, a thread that has a higher priority to be used as the alternative thread. For example, in the case where at least two threads that have the resource conflict include the first thread and the second thread, when both the first thread and the second thread are at the schedulable state and have a priority higher than the preset priority, the thread that has a higher priority, from the first thread and the second thread, may be selected as the alternative thread, and correspondingly, the other thread will not be selected in the current operation cycle.

For example, at least two threads that have the resource conflict, have a resource conflict for a first-class resource in the processor, and alternative threads are arbitrated for scheduling in the current operation cycle based on allocation of the first-class resource. The first-type resource in the above embodiment may be any type of resource in the shared resources mentioned above, which will not be repeated herein.

For example, acquiring inter-thread resource conflict information of a plurality of threads that are processed in a processor may acquire the inter-thread resource conflict information through information, recorded by a plurality of counters in first time, of the plurality of the threads competing with each other according to resources.

For example, flag bits of the at least two threads that have the resource conflict are marked after acquiring the inter-thread resource conflict information of the plurality of threads that are processed in the processor. The flag bits may be used in subsequent process.

For example, the plurality of the counters are reset to zero after marking flag bits of the at least two threads that have the resource conflict, so as to prepare for new counting and statistics, and thus, the situation of the plurality of threads in the processor is reflected in relative real time, and the lag or failure of inter-thread resource conflict information is avoided.

Fig. 5 illustrates a schematic diagram of acquiring inter-thread conflict information provided in at least one embodiment of the present disclosure.

In this embodiment, a 4-thread simultaneous multithreaded (SMT4) processor that supports two threads to be arbitrated simultaneously for scheduling is used as an example, and then the resource conflict exists between the two threads. As shown in Fig. 5, the SMT4 processor includes four threads, T0, T1, T2 and T3. The SMT4 processor includes a conflict detection module 510, and the conflict detection module 510 is used for recording information about resource competition between the plurality of threads in the first time. For example, the first time may be 1000 operation cycles (e.g., cycle 0-cycle 999), which is not limited in the embodiments of the present disclosure.

Since there are 6 combinations of resource competitions between 4 threads T0-T3, the conflict detection module 510 may use 6 counters 511 to respectively record the number of resource competitions between each pair of threads. Here, PMC[0][1] represents the number of resource competitions between the two threads T0 and T1 in 1000 operation cycles, recorded by the counter 511 corresponding to the threads T0 and the thread T1. PMC[0][2] represents the number of resource competitions between the two threads T0 and T2 in 1000 operation cycles, recorded by the counter corresponding to the threads T0 and the thread T2. The meanings of PMC[0][3], PMC[1][2], PMC[1][3] and PMC[2][3] are similar to the meanings of PMC[0][1] and PMC[0][2], which will not be repeated. For example, in the operation cycle 0, when the thread T0 is suspended for scheduling due to a resource competition between the thread T0 and the thread T1, the value of PMC[0][1] recorded by the counter 511 corresponding to the thread T0 and the thread T1 is increased by 1. After 1000 operation cycles, the numbers of competitions PMC[0][1]-PMC[2][3] between the four threads T0-T3 which are obtained, are the inter-thread resource conflict information.

It should be noted that the conflict detecting module of the above embodiment (Fig. 5) is used to detect a scenario in which a resource conflict exists between two threads, but the present disclosure is not limited to it. For example, for a SMT4 processor, in a scenario in which a resource conflict between three threads is detected, there are 4 combination manners of resource competitions between four threads, and then the conflict detection module may use four counters to respectively record the number of resource competitions between each three threads. As shown in Fig. 5, after acquiring inter-thread resource conflict information, the two threads that have a resource conflict may be determined by comparing the number of competitions between each two threads of the four threads T0-T3, PMC[0][1]-PMC[2][3]. For example, in PMC[0][1]-PMC[2][3], the value of PMC[0][2] is the largest, which indicates that the number of resource conflicts between the thread T0 and the thread T2 in the past 1000 operation cycles is the largest, and the probability that the thread T0 or the thread T2 will be suspended due to the existence of the resource conflict between the thread T0 and the thread T2 is the largest in the subsequent operation cycles. Then the flag bits of the thread T0 and the thread T2 may be marked, so that the alternative threads do not include the thread T0 and the thread T2 simultaneously.

For example, in one example, a priority list includes the flag bits of the threads T0-T3. The initial tag bits of the threads may be set to 2b'00. When marking the flag bits of the thread T0 and the thread T2, the initial flag bits 2b'00 of the thread T0 and the thread T2 may be updated to 2b'01. It indicates that the conflict extent between the thread T0 and the thread T2 is high (i.e., the conflict extent between two threads of which flag bits are marked as 01 is high), and the conflict extent between the thread T1 and any one of the thread T0 and the thread T2, or between the thread T3 and any one of the thread T0 and the thread T2 is low (i.e., the conflict extent between two threads of which flag bits are marked as 00 and 01 is low). After marking the flag bits of the thread T0 and the thread T2, the six counters 511 in the conflict detecting module 510 are reset to zero, and the six counters 511 are re-recorded the number of resource competitions between the threads T0-T3 in the next 1000 operation cycles, so as to acquire new inter-thread resource conflict information.

In another example of the above embodiment, other threads that have resource conflicts may also be marked based on the inter-thread resource conflict information. For example, in PMC[0][1]-PMC[2][3], the value of PMC[0][2] (e.g., 500) is the largest and the value of PMC[1][3] (e.g., 300) is the second largest, the flag bits of the threads T0 and T2 may be marked as 2b'01, and the flag bits of the thread T1 and the thread T3 may be marked as 2b'10, so that the alternative threads cannot include the thread T0 and the thread T2 simultaneously, nor can the alternative threads include the thread T1 and the thread T3 simultaneously.

In the embodiment of the present disclosure, recognizing threads that have a high probability of resource conflict is implemented based on the numbers of resource competitions which occur between each two threads of the plurality of threads, and in other examples, it may also be implemented by other means, which are not limited in the present disclosure. For example, threads that have a high probability of resource conflicts may be recognized through occupancy rate of shared resource of the thread. For example, for a certain shared resource (e.g., the fixed-point physical register), in the current operation cycle, the occupancy rate of the thread T0 is 40%, the occupancy rate of the thread T1 is 40%, the occupancy rate of the thread T2 is 0% (the thread T2 does not use the shared resource), and the occupancy rate of the thread T3 is 20%. When the thread T0 and the thread T1 are served as alternative threads to be arbitrated, because the thread T0 and the thread T1 have a high demand for the shared resource in the current operation cycle, the shared resource that may be dispatched may not be enough to meet the demand of both the thread T0 and the thread T1 simultaneously, which may causes that only one thread may be scheduled to enter the next stage, but the other thread is suspended for being scheduled. So, the probability of the resource conflict between the thread T0 and the thread T1 is determined to be high, and the flag bits of the thread T0 and the thread T1 may be marked.

Therefore, in the instruction processing method provided in at least one embodiment of the present disclosure, the alternative threads may also be determined through the flag bits of the threads, so that the alternative threads do not simultaneously include the at least two threads that have the resource conflict.

For example, the judgment logic for determining alternative threads may be selecting the alternative threads in order of priority, from highest to lowest, and skipping a thread of which the flag bit is not 2b'00 and is the same as the flag bit of the highest-priority thread selected. Referring to Fig. 5, when the value of PMC[0][2] is the largest, then the thread T0 and the thread T2 are determined as the two threads that have the resource conflict. The SMT4 processor supports two threads to be arbitrated for being scheduled, and when the threads T0-T3 are all at a schedulable state in the current operation cycle, then two threads may be determined as alternative threads from the threads T0 to T3. The priority list also includes the priority order of threads, for example, in the 1001 st operation cycle (i.e., cycle 1000), the priority order of the four threads T0-T3 is T0, T2, T1 and T3 from highest to lowest. According to the priority order of threads, the thread T0 has the highest priority, then the thread T0 is determined as one of the alternative threads. The thread T2 has the second highest priority, but the flag bit of the thread T2 is not 2b'00 and is the same as the flag bit 2b'01 of the highest-priority thread T0 that has already been selected, so the thread T2 is skipped when the second alternative thread is determined in order of priority from highest to lowest. The thread T1 has the third highest priority and the thread T1 has a flag bit of 2b'00, then the thread T1 may be determined as the second alternative thread. So, the alternative threads in operation cycle 1000 are the thread T0 and the thread T1. In the subsequent thread scheduling process, the resources that may be scheduled currently may be greater than or equal to the sum of the resources required by the thread T0 and the thread T1, and the thread T0 and the thread T1 are served as target threads to be scheduled.

The instruction processing method provided in at least one embodiment of the present disclosure may further include: resetting the flag bits of the plurality of the threads to zero before marking flag bits of threads that have the resource conflict.

In an example of the present disclosure, for an SMT4 processor, the current flag bits of four threads T0-T3 are 2b'01, 2b'00, 2b'01, and 2b'00, respectively. In the next 1000 operation cycles, by recording, the maximum value of the competition numbers PMC[0][1]-PMC[2][3] between each two threads of the four threads is obtained to be PMC[1][3], then before marking the flag bits of the threads T1 and T3, the current flag bits of the threads T0-T3 (2b'01, 2b'00, 2b'01 and 2b'00) are reset to zero i.e., the flag bits of the threads are all reset to 2b'00. Then the flag bits of the thread T1 and the thread T3 are marked as 2b'01, so that the flag bits of the threads T0-T3 are 2b'00, 2b'01, 2b'00 and 2b'01, respectively.

In another example of the present disclosure, a part of the flag bits of the plurality of the threads may be reset to zero before marking the flag bits of the threads that have the resource conflict. For example, for an SMT4 processor, the current flag bits of four threads T0-T3 are 2b'01, 2b'10, 2b'01 and 2b'10, respectively. In the next 1000 operation cycles, by recording, the maximum value of the competition numbers PMC[0][1]-PMC[2][3] of between each two threads of the four threads is obtained to be PMC[0][1], and before the flag bits of threads T0 and T1 are marked, the current flag bit of the thread T0 (2b'01) may be maintained, and only the current flag bits of the threads T1-T3 are reset to zero, and then the flag bit of the thread T1 is marked as 2b'01. Or, the current flag bits of the thread T0 and the thread T2 (both 2b'01) are maintained, only the current flag bits of the thread T1 and the thread T3 are reset to zero, and then the flag bit of the thread T1 is marked as 2b'01, so that the flag bits of the threads T0, T1 and T2 are all 2b'01, and thus the alternative threads cannot simultaneously include any two threads of the threads T0, T1 and T2.

In another example of the present disclosure, whether to reset the flag bits of the plurality of the threads to zero may be decided based on the number of competitions between the plurality of the threads. For example, for an SMT4 processor, the current flag bits of four threads T0-T3 are 2b'01, 2b'00, 2b'01 and 2b'00 respectively. In the next 1000 operation cycles, according to recording, for the numbers PMC[0][1]-PMC[2][3] of competitions between the four threads, the value of PMC[1][3] is the largest (e.g., 500), and the value of PMC[0][2] is the second largest (e.g., 300). Then the current flag bits (both 2b'01) of the thread 0 and the thread 2 may be maintained, the current flag bits (both 2b'00) of the thread 1 and the thread 3 are reset to zero, and then the flag bits of the thread T1 and the thread T3 are marked as 2b'10, so that the alternative threads cannot include the thread T0 and the thread T2 simultaneously, nor the thread T1 and the thread T4 simultaneously.

According to the latest PMC array values, or historical values, there may be a plurality of marking rules for threads, which may be designed according to the application scenario, requirements or design specifications, and the present disclosure is not limited to this.

It should be noted that in the above example, resetting the current flag bits (both 2b'00) of the thread T1 and the thread T3 is the first operation to be carried out, because for processors with more than 4 threads, such as SMT6 processors, SMT8 processors, etc., the current flag bits of the thread T1 and the thread T3 may be 2b'10 and 2b'00 respectively, and the current flag bits of the thread T1 and the thread T3 need to be reset to zero to avoid a marking error.

It should be noted that the instruction processing method provided in the embodiments of the present disclosure is applicable to all stages that have a resource conflict in the instruction scheduling process, including but not limited to the renaming stage.

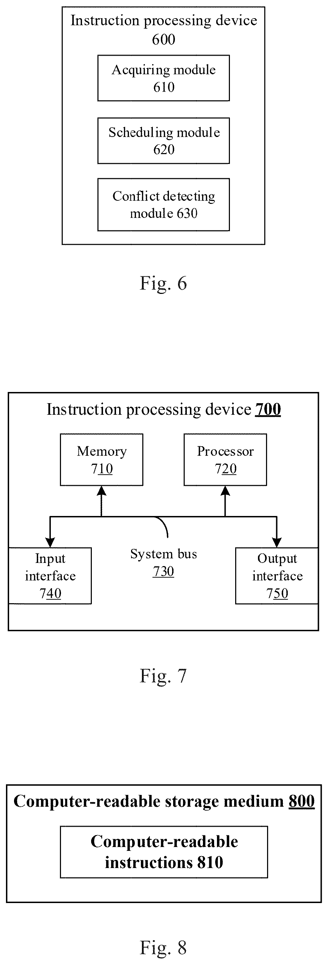

Fig. 6 illustrates a structural schematic diagram of an instruction processing device provided in at least one embodiment of the present disclosure.

As shown in Fig. 6, the instruction processing device 600 includes an acquiring module 610 and a scheduling module 620. The acquiring module 610 is configured to acquire inter-thread resource conflict information of a plurality of threads that are processed in a processor, to determine at least two threads that have a resource conflict among the plurality of threads. The scheduling module 620 is configured to determine alternative threads that are arbitrated for scheduling in a current operation cycle from the plurality of the threads, and determine a target thread to be scheduled in the current operation cycle from the alternative threads, wherein the alternative threads do not simultaneously include the at least two threads that have the resource conflict.

For example, the scheduling module 620 is configured to select the determined alternative threads from the plurality of the threads and make the determined alternative threads to be threads which are at a schedulable state in the current operation cycle.

For example, the scheduling module 620 is configured to further select the determined alternative threads from threads of which a thread priority is higher than a preset priority among the plurality of the threads.

For example, the scheduling module 620 is further configured to select, from the at least two threads that have the resource conflict, a thread that has a higher priority to be used for the alternative threads.

For example, the at least two threads that have the resource conflict have the resource conflict for a first-class resource in the processor, and the scheduling module 620 causes the alternative threads to be arbitrated for scheduling in the current operation cycle based on allocation for the first-class resource.

The instruction processing device 600 in the above embodiments further includes a conflict detecting module 630. The conflict detecting module 630 includes a plurality counters and is configured to acquire the inter-thread resource conflict information based on competitive information, recorded by a plurality of counters in first time, between the plurality of the threads with each other according to a resource. The embodiments of the present disclosure do not restrict the implementing way of the counters and the like.

For example, the instruction processing device 600 in the above embodiments further includes a marking module (not marked in Fig. 6). The marking module is configured to mark flag bits of the at least two threads that have the resource conflict after acquiring inter-thread resource conflict information of a plurality of threads that are processed in a processor. For example, the marking module is further configured to reset flag bits of the plurality of the threads to be zero before marking flag bits of threads that have the resource conflict.

For example, the conflict detecting module 630 is further configured to reset the plurality of the counters to be zero after the marking flag bits of the threads that have the resource conflict.

For example, the scheduling module 620 is configured to determine the alternative threads based on flag bits corresponding to the plurality of the threads, so that the alternative threads do not simultaneously include the at least two threads that have the resource conflict.

The instruction processing device or the modules in the instruction processing device of the above embodiments of the present disclosure may, for example, be implemented by hardware, software, firmware or any combination thereof, and the embodiments of the present disclosure are not limited thereto.

Fig. 7 illustrates a structural schematic diagram of another instruction processing device provided in at least one embodiment of the present disclosure.

As shown in Fig. 7, the instruction processing device 700 includes a processor 720 and a memory 710. The memory 710 stores computer-readable instructions and is communicatively connected to the processor 720. The processor 720 executes the computer-readable instructions stored in the memory 710 to implement the instruction processing method provided in any embodiment of the present disclosure.

For example, the memory 710 and the processor 720 may communicate directly or indirectly with each other. For example, in some examples, as shown in Fig. 7, the instruction processing device 700 may also include a system bus 730, and the memory 710 and the processor 720 may communicate with each other through the system bus 730. For example, the processor 720 may access the memory 710 through the system bus 730. For example, in other examples, components such as the memory 710 and the processor 720 may communicate with each other via a network-on-chip (NOC) connection.

For example, the processor 720 may control other components in the instruction processing device to perform the desired functions. The processor 720 may be a central processing unit (CPU), a tensor processor (TPU), a network processor (NP) or a graphics processing unit (GPU) and other devices with data processing ability and/or program execution ability, and may also be a digital signal processor (DSP), an application-specific integrated circuit (ASIC), a field-programmable gate array (FPGA) or other programmable logic devices, discrete gate or transistor logic devices, discrete hardware components, etc.

For example, the memory 710 may include any combination of one or more computer program products, and computer program products may include various forms of computer-readable storage media, such as volatile memory and/or non-volatile memory. The volatile memory may include, for example, a random access memory (RAM) and/or a cache. The non-volatile memory may include, for example, a read-only memory (ROM), a hard disk, an erasable programmable read-only memory (EPROM), a portable compact disk read-only memory (CD-ROM), a USB memory, a flash memory, etc.

For example, one or more computer-readable instructions may be stored in the memory 710, and the processor 720 may run the computer-readable instructions to implement various functions. A variety of applications and a variety of data, such as instruction processing codes and various data used and/or generated by the application, may also be stored in a computer-readable storage medium.

For example, when some computer instructions stored in the memory 710 are executed by the processor 720, one or more steps in the instruction processing method described above may be executed.

For example, as shown in Fig. 7, the instruction processing device 700 may also include an input interface 740 that allows an external device to communicate with the instruction processing device 700. For example, the input interface 740 may be used to receive instructions from an external computer device, a user, etc. The instruction processing device 700 may also include an output interface 750 that enables the instruction processing device 700 and one or more external devices to be connected to each other. For example, the instruction processing device 700 may be through the output interface 750 and so on.

It should be noted that the instruction processing device provided in the embodiments of the present disclosure is exemplary, not restrictive. The instruction processing device may also include other conventional components or structures according to the needs of practical application. For example, in order to implement the necessary functions of the instruction processing device, those skilled in the art may arrange other conventional components or structures according to specific application scenarios, which is not limited in the embodiments of the present disclosure.

At least one embodiment of the present disclosure further provides a processor, and the processor may, for example, be an SMT processor. The processor includes the instruction processing device provided in any embodiment of the present disclosure. The maximum number of threads that may be supported by an SMT processor may, for example, be 2, 4, 8, etc. The processor may be a single-core or multi-core processor, for example, the processor core may use a microarchitecture such as X86, ARM, RISC-V, etc., and may include a first-level or multi-level cache, which is not limited in the embodiments of the present disclosure.

At least one embodiment of the present disclosure further provides a computer-readable storage medium.

Fig. 8 is a schematic diagram of a computer-readable storage medium provided in at least one embodiment of the present disclosure.

For example, as shown in Fig. 8, the computer-readable storage medium 800 stores computer-readable instructions 810, and when the computer-readable instructions 810 are executed by a computer (including a processor), the instruction processing method provided in any embodiment of the present disclosure may be implemented.

For example, one or more computer-readable instructions may be stored in a computer-readable storage medium 800. Some computer-readable instructions stored in a computer-readable storage medium 800 may be, for example, instructions used for implementing one or more steps of the instruction processing method described above.

For example, the computer-readable storage medium may include storage components of a tablet, a hard disk of a personal computer, a random access memory (RAM), a read-only memory (ROM), an erasable programmable read-only memory (EPROM), an optical disc read-only memory (CD-ROM), a flash memory, or any combination of the above, or other applicable storage media. For example, the computer-readable storage medium 800 may include the memory 710 in the instruction processing device 700 described above.

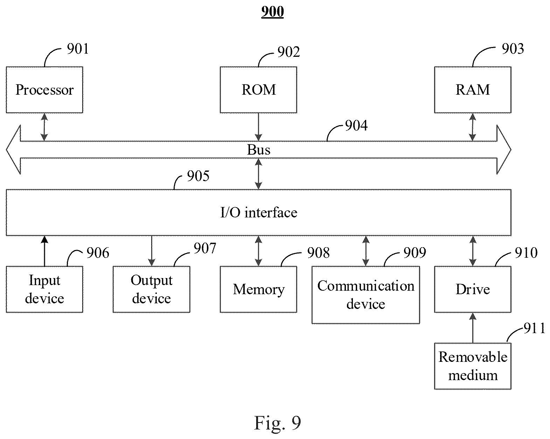

At least some embodiments of the present disclosure further provide an electronic device. The electronic device includes the processor in any embodiment mentioned above. Fig. 9 is a schematic block diagram of an electronic device provided in at least one embodiment of the present disclosure.

The electronic device in the embodiments of the present disclosure may be implemented as, but are not limited to, mobile terminals such as mobile phones, notebook computers, digital radio receivers, PDAs (personal digital assistants), PADs (tablet computers), PMPs (portable multimedia players), vehicle-mounted terminals (such as vehicle-mounted navigation terminals) and fixed terminals such as digital televisions, desktop computers, etc.

The electronic device 900 shown in Fig. 9 is only an example and should not bring any limitation on the functionality and using scope of the embodiments of the present disclosure.

For example, as shown in Fig. 9, in some examples, the electronic device 900 includes a processor 901, which may include a processor in any embodiment mentioned above. The processor 901 may perform various appropriate actions and processes based on programs stored in the read-only memory (ROM) 902 or loaded from memory 908 to the random access memory (RAM) 903. In the RAM 903, various programs and data required for the operation of the computer system are also stored. The processor 901, ROM 902 and RAM 903 are connected via the bus 904. The input/output (I/O) interface 905 is also connected to the bus 904.

For example, the following components may be connected to the I/O interface 905: an input device 906 including, for example, a touch screen, a touchpad, a keyboard, a mouse, a camera, a microphone, an accelerometer, a gyroscope, etc.; an output device 907 including, for example, a liquid crystal display (LCD), a speaker, a vibrator, etc.; a memory 908 including, for example, a tape, a hard disk, etc.; and a communication device 909 that may include a network interface card such as a LAN card, a modem, etc. The communication device 909 may allow the electronic device 900 to communicate wirelessly or wired with other devices to exchanging data, and perform communication processing over a network such as the Internet. The drive 910 is also connected to the I/O interface 905 as required. The removable medium 911, such as a disk, an optical disc, a magnetooptical disc, a semiconductor memory, etc., is installed on the drive 910 as required, so that computer programs that are read from the removable medium 911 are installed into the memory 908 as required. Although Fig. 9 shows an electronic device 900 including various apparatuses, it should be understood that it is not required to implement or include all of the devices shown. More or fewer apparatuses can be implemented or included alternatively.

For example, the electronic device 900 may further include peripheral interface (not shown in the figure), etc. The peripheral interface may be various types of interfaces, such as USB interfaces, lightning interfaces, etc. The communication device 909 may communicate with a network and other devices through wireless communication, the network may be such as an Internet, an intranet and/or a wireless network such as a cellular telephone network, a wireless local area network (LAN) and/or a metropolitan area network (MAN). The wireless communication may use any of a variety of communication standards, protocols, and technologies, including, but not limited to, the Global System for Mobile Communications (GSM), Enhanced Data GSM Environment (EDGE), Wideband Code Division Multiple Access (W-CDMA), Code Division Multiple Access (CDMA), Time Division Multiple Access (TDMA), Bluetooth, Wi-Fi (e.g., based on IEEE 802. 11a, IEEE 802. 11b, IEEE 802. 11g and/or IEEE 802. 11n standard), Internet protocol-based voice transmission (VoIP), Wi-MAX, protocol for e-mail, instant messaging and/or short message service (SMS), or any other appropriate communication protocol.

In addition to the above exemplary illustration, there are a few more points to be explained.
(1) The drawings of the embodiments of the present disclosure only relate to the structures related to the embodiments of the present disclosure, and other structures may refer to the usual design.
(2) Without a conflict, the embodiments of the present disclosure and the features in the embodiments may be combined with each other to obtain new embodiments.

The foregoing is only an exemplary embodiment of the present disclosure and is not intended to limit the protection scope of the present disclosure, which is determined by the attached claims.

## Claims

1. An instruction processing method, comprising:
acquiring inter-thread resource conflict information of a plurality of threads which are processed in a processor, to determine at least two threads having a resource conflict in the plurality of threads;
determining alternative threads which are arbitrated for being scheduled in a current operation cycle from the plurality of the threads, wherein the alternative threads do not simultaneously comprise the at least two threads having the resource conflict; and
determining a target thread to be scheduled in the current operation cycle from the alternative threads.

2. The instruction processing method of claim 1, wherein the alternative threads are selected from the plurality of the threads and are threads which are at a schedulable state in the current operation cycle.

3. The instruction processing method of claim 2, wherein the alternative threads are further selected from threads of which a thread priority is higher than a preset priority in the plurality of the threads.

4. The instruction processing method of claim 1, further comprising:
selecting, from the at least two threads having the resource conflict, a thread which has a higher thread priority to be used for the alternative threads.

5. The instruction processing method of claim 1, wherein the at least two threads having the resource conflict have the resource conflict for a first-class resource in the processor, and the alternative threads are arbitrated for being scheduled in the current operation cycle based on allocation for the first-class resource.

6. The instruction processing method of any one of claims 1-5, wherein the acquiring inter-thread resource conflict information of a plurality of threads which are processed in a processor, comprises:
acquiring the inter-thread resource conflict information based on competitive information between the plurality of the threads with each other according to a resource which is recorded by a plurality of counters in a first time.

7. The instruction processing method of claim 6, further comprising:
marking flag bits of the at least two threads having the resource conflict after the acquiring inter-thread resource conflict information of a plurality of threads which are processed in a processor.

8. The instruction processing method of claim 7, wherein the alternative threads are determined based on the flag bits corresponding to the plurality of the threads, so that the alternative threads do not simultaneously comprise the at least two threads having the resource conflict.

9. The instruction processing method of claim 7, further comprising:
resetting the flag bits of the plurality of the threads to zero before marking the flag bits of the at least two threads having the resource conflict.

10. The instruction processing method of claim 7, further comprising:
resetting the plurality of the plurality of counters to zero after the marking the flag bits of the at least two threads having the resource conflict.

11. An instruction processing device, comprising:
an acquiring module, configured to acquire inter-thread resource conflict information of a plurality of threads which are processed in a processor, to determine at least two threads which have a resource conflict in the plurality of threads; and
a scheduling module, configured to determine alternative threads which are arbitrated for being scheduled in a current operation cycle from the plurality of the threads, and determine a target thread to be scheduled in the current operation cycle from the alternative threads, wherein the alternative threads do not simultaneously comprise the at least two threads which have the resource conflict.

12. The instruction processing device of claim 11, wherein the alternative threads are selected from the plurality of the threads and are threads which are at a schedulable state in the current operation cycle.

13. The instruction processing device of claim 12, wherein the alternative threads are further selected from threads of which a thread priority is higher than a preset priority in the plurality of the threads.

14. The instruction processing device of claim 11, wherein the scheduling module is further configured to select a thread which has a higher priority to be used for the alternative threads from the at least two threads which have the resource conflict.

15. the instruction processing device of claim 11, wherein the at least two threads which have the resource conflict have the resource conflict for a first-class resource in the processor; and
the scheduling module causes the alternative thread to be arbitrated for being scheduled in the current operation cycle based on allocation for the first-class resource.

16. The instruction processing device of any one of claims 11-15, further comprising:
a conflict detecting module, comprising a plurality of counters, and configured to acquire the inter-thread resource conflict information based on competitive information between the plurality of the threads with each other according to a resource which is recorded by a plurality of counters in a first time.

17. The instruction processing device of claim 16, further comprising:
a marking module, configured to mark flag bits of the at least two threads which have the resource conflict after the acquiring inter-thread resource conflict information of a plurality of threads which are processed in a processor.

18. The instruction processing device of claim 17, wherein the marking module is further configured to reset the flag bits of the plurality of the threads to zero before marking the flag bits of the at least two threads which have the resource conflict.

19. The instruction processing device of claim 17, wherein the conflict detecting module is further configured to reset the plurality of the counters to zero after the marking the flag bits of the at least two threads which have the resource conflict.

20. An instruction processing device, comprising:
a processor and a memory;
wherein the memory stores computer-readable instructions and is communicatively connected with the processor; and
the processor executes the computer-readable instructions stored in the memory to implement the instruction processing method of any one of claims 1-10.

21. A processor, comprising the instruction processing device of any one of claims 11-20.

22. A computer-readable storage medium, wherein computer-readable instructions are stored in the computer-readable storage medium, and when a processor executes the computer-readable instructions, the instruction processing method of any one of claims 1-10 is implemented.
